# EUROPEAN PATENT APPLICATION

(11) **EP 3 952 380 A1**
(43) Date of publication of application: **09.02.2022**
(21) Application number: 20794351.5
(22) Date of filing: 09.04.2020
(51) Int. Cl.: H04W 12/12

(54) **PSEUDO BASE STATION IDENTIFICATION METHOD, AND RELATED DEVICE AND SYSTEM**

(30) Priority: 25.04.2019 CN 201910343491
(71) Applicant: Huawei Technologies Co., Ltd., Shenzhen, Guangdong 518129 (CN)
(72) Inventor: GENG, Tingting, Shenzhen, Guangdong 518129 (CN); YAN, Le, Shenzhen, Guangdong 518129 (CN)
(74) Representative: Maiwald Patent- und Rechtsanwaltsgesellschaft mbH
(86) International application number: PCT/CN2020/084000
(87) International publication number: WO 2020/216070

(57) **Abstract**

Embodiments of the present invention provide a fake base station identification method, a related device, and a system that are applied to the field of wireless communications technologies. The method includes: A terminal device generates a cell monitoring report, where the cell monitoring report includes an identifier of a cell on which the terminal device camps and first time information, and the first time information is used to indicate a time point at which or a time period in which the terminal device does not receive a paging message in a time period of camping on the cell. The terminal device sends the cell monitoring report to a network device. The network device identifies a fake base station based on the cell monitoring report. In the embodiments of the present invention, a fake base station can be accurately identified.

## Description

### TECHNICAL FIELD

This application relates to the field of communications technologies, and in particular, to a fake base station identification method, a related device, and a system.

### BACKGROUND

A fake base station is usually used by a criminal to transmit illegal information or even steal personal information of a user, resulting in a great hazard. In this process, normal communication of the user is interrupted, and user experience is seriously affected. A fake base station on a network may pretend to be a normal base station to send a normal radio signal. A terminal may camp on the fake base station. The terminal that camps on the fake base station cannot receive downlink paging. Therefore, paging fails when the network pages the terminal.

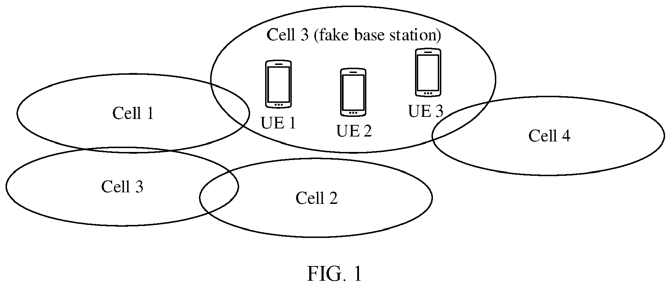

As shown in FIG. 1, when user equipment (user equipment, UE) 1, UE 2, and UE 3 camp on a cell 3 of a fake base station, and a network pages these UEs, the fake base station cannot receive the paging sent by the network. Even if the fake base station receives the paging, the fake base station does not forward the paging to the UEs. In this way, the UEs are prevented from identifying the fake base station when the UEs initiate paging responses and need to enter a connected state but the fake base station cannot provide security authentication. Therefore, when the UE camps on the fake base station, the UE cannot receive the paging from the network to the UE, and the UE does not respond to the paging. As a result, the network device considers that the paging fails. Therefore, how to identify a fake base station becomes an urgent problem to be resolved.

### SUMMARY

Embodiments of the present invention provide a fake base station identification method, a related device, and a system, to accurately identify a fake base station.

According to a first aspect, an embodiment of the present invention provides a fake base station identification method applied to a terminal device side. The method includes: A terminal device generates a cell monitoring report, where the cell monitoring report includes an identifier of a cell on which the terminal device camps and first time information, and the first time information is used to indicate a time point at which or a time period in which the terminal device does not receive a paging message in a time period of camping on the cell. Then, the terminal device sends the cell monitoring report to a network device. In this embodiment of the present invention, the terminal device may record information about a camped-on cell in which the paging message is not received, and report the information to the network device, to assist the network device in identifying a fake base station. This helps reduce complexity of identifying the fake base station by an operator through a drive test, avoid a denial-of-service attack (DoS attack) on the terminal device caused by the fake base station, and avoid a service problem caused by the terminal device not receiving downlink paging.

In a possible design, before the terminal device generates the cell monitoring report, the method further includes: If the terminal device is in a non-connected state in a first preset time period, the terminal device sends a first request to the cell, where a start moment of the first preset time period is later than or the same as a start moment of the time period of camping. The first request is used to verify security of the cell. The cell fails the security verification of the terminal device. In this embodiment of the present invention, if the terminal device fails to enter a connected state in a period of time in which the terminal device camps on the cell, the terminal device may actively initiate a security verification process. If the security verification fails, the terminal device needs to record the cell monitoring report, and report the cell monitoring report to the network device for fake base station identification. This helps reduce complexity of identifying a fake base station by an operator through a drive test, avoid a denial -of-service attack (DoS attack) on the terminal device caused by the fake base station, and avoid a service problem caused by the terminal device not receiving the downlink paging.

In a possible design, after the cell fails the security verification of the terminal device, the method further includes: The terminal device sets the cell to have a lowest priority in a second preset time period.

In a possible design, the cell monitoring report further includes one or more of indication information used to indicate that the terminal device does not receive the paging message at the time point or in the time period, measured quality of the cell, frequency information of the cell, and location information of the terminal device at the time point or in the time period.

In a possible design, the measured quality of the cell is quality of the cell measured by the terminal device at the time point; or the measured quality of the cell is average quality of the cell measured by the terminal device in the time period.

The cell is a cell in which the terminal device is always in a non-connected state in a time period in which the terminal device camps on the cell. That the terminal device is in the non-connected state in the time period of camping on the cell includes at least one of the following scenarios: The UE does not have any uplink (uplink, UL) service and does not receive any paging message; the UE has a UL service but fails to switch to a connected state in which security is activated; the UE receives the paging message, and the UE responds but fails to switch to a connected (active) state in which security is activated; or the UE cannot activate security configurations.

Optionally, the terminal device that generates the cell monitoring report may be a terminal device that is in an idle (idle) state or in an inactive (inactive) state in the time period of camping on the cell.

Optionally, the identifier of the cell includes but is not limited to at least one of the following: a cell global identifier (cell global identifier, CGI), a cell identifier (cell identifier), or a physical cell identifier (physical cell identifier, PCI).

According to a second aspect, an embodiment of the present invention provides a fake base station identification method applied to a network device side. The method includes: A network device receives a cell monitoring report sent by a terminal device, where the cell monitoring report includes an identifier of a cell on which the terminal device camps and first time information, and the first time information is used to indicate a time point at which or a time period in which the terminal device does not receive a paging message in a time period of camping on the cell. The network device identifies a fake base station based on the cell monitoring report. In this embodiment of the present invention, the terminal device may record information about a camped-on cell in which the paging message is not received, and report the information to the network device, to assist the network device in identifying the fake base station. This helps reduce complexity of identifying the fake base station by an operator through a drive test, avoid a denial-of-service attack (DoS attack) on the terminal device caused by the fake base station, and avoid a service problem caused by the terminal device not receiving downlink paging.

In a possible design, if a moment at which the network device fails to page the terminal device includes the time point or the time period includes the moment at which the network device fails to page the terminal device, a base station to which the cell belongs is a fake base station.

In a possible design, the cell monitoring report further includes measured quality of the cell; and if a moment at which the network device fails to page the terminal device includes the time point, and the measured quality of the cell is greater than or equal to a first preset threshold, a base station to which the cell belongs is a fake base station; or if the time period includes a moment at which the network device fails to page the terminal device, and the measured quality of the cell is greater than or equal to a first preset threshold, a base station to which the cell belongs is a fake base station.

In a possible design, the cell monitoring report further includes one or more of indication information used to indicate that the terminal device does not receive any paging message at the time point or in the time period, frequency information of the cell, and location information of the terminal device at the time point or in the time period.

In a possible design, the measured quality of the cell is quality of the cell measured by the terminal device at the time point; or the measured quality of the cell is average quality of the cell measured by the terminal device in the time period.

The cell is a cell in which the terminal device is always in a non-connected state in a time period in which the terminal device camps on the cell. That the terminal device is in the non-connected state in the time period of camping on the cell includes at least one of the following scenarios: The UE does not have any UL service and does not receive any paging message; the UE has a UL service but fails to switch to a connected state in which security is activated; the UE receives the paging message, and the UE responds but fails to switch to a connected (active) state in which security is activated; or the UE cannot activate security configurations.

Optionally, the terminal device that generates the cell monitoring report may be a terminal device that is in an idle (idle) state or in an inactive (inactive) state in the time period of camping on the cell.

Optionally, the identifier of the cell includes but is not limited to at least one of the following: a CGI, a cell identifier (cell identifier), or a PCI.

According to a third aspect, an embodiment of the present invention provides a fake base station identification method applied to a terminal device side. The method includes:

If a terminal device is in a non-connected state in a first preset time period, the terminal device sends a first request to a cell, where a start moment of the first preset time period is later than or the same as a start moment of a time period of camping. The first request is used to verify security of the cell. If the cell fails the security verification of the terminal device, the terminal device generates a cell monitoring report, where the cell monitoring report includes an identifier of a cell on which the terminal device camps and first time information, and the first time information is used to indicate a time point at which or a time period in which the terminal device does not receive a paging message in the time period of camping on the cell. The terminal device sends the cell monitoring report to a network device. In this embodiment of the present invention, if the terminal device fails to enter a connected state in a period of time in which the terminal device camps on the cell, the terminal device may actively initiate a security verification process. If the security verification fails, the terminal device needs to record the cell monitoring report, and report the cell monitoring report to the network device for fake base station identification. This helps reduce complexity of identifying a fake base station by an operator through a drive test, avoid a denial-of-service attack (DoS attack) on the terminal device caused by the fake base station, and avoid a service problem caused by the terminal device not receiving downlink paging.

In a possible design, the method further includes: After the cell fails the security verification of the terminal device, the terminal device sets the cell to have a lowest priority in a second preset time period.

In a possible design, the cell monitoring report further includes one or more of indication information used to indicate that the terminal device does not receive any paging message at the time point or in the time period, measured quality of the cell, frequency information of the cell, and location information of the terminal device at the time point or in the time period.

In a possible design, the measured quality of the cell is quality of the cell measured by the terminal device at the time point; or the measured quality of the cell is average quality of the cell measured by the terminal device in the time period.

The cell is a cell in which the terminal device is always in a non-connected state in a time period in which the terminal device camps on the cell. That the terminal device is in the non-connected state in the time period of camping on the cell includes at least one of the following scenarios: The UE does not have any UL service and does not receive any paging message; the UE has a UL service but fails to switch to a connected state in which security is activated; the UE receives the paging message, and the UE responds but fails to switch to a connected (active) state in which security is activated; or the UE cannot activate security configurations.

Optionally, the terminal device that generates the cell monitoring report may be in an idle (idle) state or may be in an inactive (inactive) state.

Optionally, the identifier of the cell includes but is not limited to at least one of the following: a CGI, a cell identifier (cell identifier), or a PCI.

According to a fourth aspect, an embodiment of the present invention provides a fake base station identification method applied to a terminal device side. The method includes: A terminal device generates a cell monitoring report, where the cell monitoring report includes an identifier of a cell on which the terminal device camps and second time information, the second time information is used to indicate a time point at which or a time period in which the terminal device receives a first message in a time period of camping on the cell, and the first message is used to indicate the terminal device to enter an idle state. Then, the terminal device sends the cell monitoring report to a network device. In this embodiment of the present invention, the terminal device may record information about a cell in which an abnormal paging message is sent, and report the information to the network device, to assist the network device in identifying a fake base station. This helps reduce complexity of identifying the fake base station by an operator through a drive test, avoid a denial-of-service attack (DoS attack) on the terminal device caused by the fake base station, and avoid a service problem caused by the terminal device not receiving downlink paging.

In a possible design, the cell monitoring report further includes one or more of frequency information of the cell and location information of the terminal device at the time point or in the time period.

The terminal device is a terminal device that is in a deactive (inactive) state in the time period of camping on the cell.

The first message may be a radio resource control (radio resource control, RRC) connection setup (connection setup) message, an RRC setup message, or a first paging message. The first paging message includes a core network identifier of the terminal device. The first paging message is a paging message triggered by a core network device.

According to a fifth aspect, an embodiment of the present invention provides a fake base station identification method applied to a network device side. The method includes: A network device receives a cell monitoring report sent by a terminal device, where the cell monitoring report includes an identifier of a cell on which the terminal device camps and second time information, the second time information is used to indicate a time point at which or a time period in which the terminal device receives a first message in a time period of camping on the cell, and the first message is used to indicate the terminal device to enter an idle state. The network device identifies a fake base station based on the cell monitoring report. In this embodiment of the present invention, the terminal device may record information about a cell in which an abnormal paging message is sent, and report the information to the network device, to assist the network device in identifying the fake base station. This helps reduce complexity of identifying the fake base station by an operator through a drive test, avoid a denial-of-service attack (DoS attack) on the terminal device caused by the fake base station, and avoid a service problem caused by the terminal device not receiving downlink paging.

In a possible design, if the network device does not send the first message to the terminal device at the time point or in the time period, a base station to which the cell belongs is a fake base station.

In a possible design, the cell monitoring report further includes one or more of frequency information of the cell and location information of the terminal device at the time point or in the time period.

The terminal device is a terminal device that is in a deactive (inactive) state in the time period of camping on the cell.

The first message may be a radio resource control (radio resource control, RRC) connection setup (connection setup) message, an RRC setup message, or a first paging message. The first paging message includes a core network identifier of the terminal device. The first paging message is a paging message triggered by a core network device.

According to a sixth aspect, an embodiment of the present invention provides a terminal device. The terminal device may include a plurality of functional modules or units, configured to correspondingly perform the fake base station identification method provided in the first aspect or the fake base station identification method provided in any one of the possible implementations of the first aspect. For example, the terminal device includes a processing unit and a sending unit.

The processing unit is configured to generate a cell monitoring report, where the cell monitoring report includes an identifier of a cell on which the terminal device camps and first time information, and the first time information is used to indicate a time point at which or a time period in which the terminal device does not receive a paging message in a time period of camping on the cell.

The sending unit is configured to send the cell monitoring report to a network device.

According to a seventh aspect, an embodiment of the present invention provides a network device. The network device may include a plurality of functional modules or units, configured to correspondingly perform the fake base station identification method provided in the second aspect or the fake base station identification method provided in any one of the possible implementations of the second aspect. For example, the network device includes a receiving unit and a processing unit.

The receiving unit is configured to receive a cell monitoring report sent by a terminal device, where the cell monitoring report includes an identifier of a cell on which the terminal device camps and first time information, and the first time information is used to indicate a time point at which or a time period in which the terminal device does not receive a paging message in a time period of camping on the cell.

The processing unit is configured to identify a fake base station based on the cell monitoring report.

According to an eighth aspect, an embodiment of the present invention provides a terminal device. The terminal device may include a plurality of functional modules or units, configured to correspondingly perform the fake base station identification method provided in the third aspect or the fake base station identification method provided in any one of the possible implementations of the third aspect. For example, the terminal device includes a processing unit and a sending unit.

The sending unit is configured to: if the terminal device is in a non-connected state in a first preset time period, send a first request to a cell, where a start moment of the first preset time period is later than or the same as a start moment of a time period of camping. The first request is used to verify security of the cell.

The processing unit is configured to: if the cell fails the security verification of the terminal device, generate a cell monitoring report, where the cell monitoring report includes an identifier of a cell on which the terminal device camps and first time information, and the first time information is used to indicate a time point at which or a time period in which the terminal device does not receive a paging message in the time period of camping on the cell.

The sending unit is further configured to send the cell monitoring report to a network device.

According to a ninth aspect, an embodiment of the present invention provides another terminal device. The terminal device may include a plurality of functional modules or units, configured to correspondingly perform the fake base station identification method provided in the fourth aspect or the fake base station identification method provided in any one of the possible implementations of the fourth aspect. For example, the terminal device includes a processing unit and a sending unit.

The processing unit is configured to generate a cell monitoring report, where the cell monitoring report includes an identifier of a cell on which the terminal device camps and second time information, the second time information is used to indicate a time point at which or a time period in which the terminal device receives a first message in a time period of camping on the cell, and the first message is used to indicate the terminal device to enter an idle state.

The sending unit is configured to send the cell monitoring report to a network device.

According to a tenth aspect, an embodiment of the present invention provides another network device. The network device may include a plurality of functional modules or units, configured to correspondingly perform the fake base station identification method provided in the fifth aspect or the fake base station identification method provided in any one of the possible implementations of the fifth aspect. For example, the network device includes a receiving unit and a processing unit.

The receiving unit is configured to receive a cell monitoring report sent by a terminal device, where the cell monitoring report includes an identifier of a cell on which the terminal device camps and second time information, the second time information is used to indicate a time point at which or a time period in which the terminal device receives a first message in a time period of camping on the cell, and the first message is used to indicate the terminal device to enter an idle state.

The processing unit is configured to identify a fake base station based on the cell monitoring report.

According to an eleventh aspect, an embodiment of the present invention provides a terminal device, configured to perform the fake base station identification method described in the first aspect. The terminal device may include: a memory, and a processor, a transmitter, and a receiver that are coupled to the memory. For example, the transmitter is configured to support the terminal device in performing a step of sending information by the terminal device in the fake base station identification method provided in the first aspect. The receiver is configured to support the terminal device in performing a step of receiving information by the terminal device in the fake base station identification method provided in the first aspect. The processor is configured to support the terminal device in performing another processing step, performed by the terminal device, in addition to the step of sending information and the step of receiving information that are in the fake base station identification method provided in the first aspect. It should be noted that the transmitter and the receiver in this embodiment of the present invention may be integrated together, or may be coupled by using a coupler. The memory is configured to store implementation code of the fake base station identification method described in the first aspect. The processor is configured to execute program code stored in the memory, that is, execute the fake base station identification method provided in the first aspect or the fake base station identification method provided in any one of the possible implementations of the first aspect. The memory and the processor may be integrated together, or may be coupled by using a coupler.

According to a twelfth aspect, an embodiment of the present invention provides a network device, configured to perform the fake base station identification method described in the second aspect. The network device may include: a memory, and a processor, a transmitter, and a receiver that are coupled to the memory. For example, the transmitter is configured to support the network device in performing a step of sending information by the network device in the fake base station identification method provided in the second aspect. The receiver is configured to support the network device in performing a step of receiving information by the network device in the fake base station identification method provided in the second aspect. The processor is configured to support the network device in performing another processing step, performed by the network device, in addition to the step of sending information and the step of receiving information that are in the fake base station identification method provided in the second aspect. It should be noted that the transmitter and the receiver in this embodiment of the present invention may be integrated together, or may be coupled by using a coupler. The memory is configured to store implementation code of the fake base station identification method described in the second aspect. The processor is configured to execute program code stored in the memory, that is, execute the fake base station identification method provided in the second aspect or the fake base station identification method provided in any one of the possible implementations of the second aspect. The memory and the processor may be integrated together, or may be coupled by using a coupler.

According to a thirteenth aspect, an embodiment of the present invention provides a terminal device, configured to perform the fake base station identification method described in the third aspect. The terminal device may include: a memory, and a processor, a transmitter, and a receiver that are coupled to the memory. For example, the transmitter is configured to support the terminal device in performing a step of sending information by the terminal device in the fake base station identification method provided in the third aspect. The receiver is configured to support the terminal device in performing a step of receiving information by the terminal device in the fake base station identification method provided in the third aspect. The processor is configured to support the terminal device in performing another processing step, performed by the terminal device, in addition to the step of sending information and the step of receiving information that are in the fake base station identification method provided in the third aspect. It should be noted that the transmitter and the receiver in this embodiment of the present invention may be integrated together, or may be coupled by using a coupler. The memory is configured to store implementation code of the fake base station identification method described in the third aspect. The processor is configured to execute program code stored in the memory, that is, execute the fake base station identification method provided in the third aspect or the fake base station identification method provided in any one of the possible implementations of the third aspect. The memory and the processor may be integrated together, or may be coupled by using a coupler.

According to a fourteenth aspect, an embodiment of the present invention provides a terminal device, configured to perform the fake base station identification method described in the fourth aspect. The terminal device may include: a memory, and a processor, a transmitter, and a receiver that are coupled to the memory. For example, the transmitter is configured to support the terminal device in performing a step of sending information by the terminal device in the fake base station identification method provided in the fourth aspect. The receiver is configured to support the terminal device in performing a step of receiving information by the terminal device in the fake base station identification method provided in the fourth aspect. The processor is configured to support the terminal device in performing another processing step, performed by the terminal device, in addition to the step of sending information and the step of receiving information that are in the fake base station identification method provided in the fourth aspect. It should be noted that the transmitter and the receiver in this embodiment of the present invention may be integrated together, or may be coupled by using a coupler. The memory is configured to store implementation code of the fake base station identification method described in the fourth aspect. The processor is configured to execute program code stored in the memory, that is, execute the fake base station identification method provided in the fourth aspect or the fake base station identification method provided in any one of the possible implementations of the fourth aspect. The memory and the processor may be integrated together, or may be coupled by using a coupler.

According to a fifteenth aspect, an embodiment of the present invention provides a network device, configured to perform the fake base station identification method described in the fifth aspect. The network device may include: a memory, and a processor, a transmitter, and a receiver that are coupled to the memory. For example, the transmitter is configured to support the network device in performing a step of sending information by the network device in the fake base station identification method provided in the fifth aspect. The receiver is configured to support the network device in performing a step of receiving information by the network device in the fake base station identification method provided in the fifth aspect. The processor is configured to support the network device in performing another processing step, performed by the network device, in addition to the step of sending information and the step of receiving information that are in the fake base station identification method provided in the fifth aspect. It should be noted that the transmitter and the receiver in this embodiment of the present invention may be integrated together, or may be coupled by using a coupler. The memory is configured to store implementation code of the fake base station identification method described in the fifth aspect. The processor is configured to execute program code stored in the memory, that is, execute the fake base station identification method provided in the fifth aspect or the fake base station identification method provided in any one of the possible implementations of the fifth aspect. The memory and the processor may be integrated together, or may be coupled by using a coupler.

According to a sixteenth aspect, an embodiment of the present invention provides a communications system, including a terminal device and a network device. For example, the terminal device may be the terminal device described in the sixth aspect or the eleventh aspect, and the network device may be the network device described in the seventh aspect or the twelfth aspect. Alternatively, the terminal device may be the terminal device described in the eighth aspect or the thirteenth aspect, and the network device may be the network device described in the seventh aspect or the twelfth aspect.

According to a seventeenth aspect, an embodiment of the present invention provides a communications system, including a terminal device and a network device. For example, the terminal device may be the terminal device described in the ninth aspect or the fourteenth aspect, and the network device may be the network device described in the tenth aspect or the fifteenth aspect.

According to an eighteenth aspect, an embodiment of the present invention provides a computer-readable storage medium. The readable storage medium stores instructions; and when the instructions are run on a computer, the computer is enabled to perform the fake base station identification method described in any one of the foregoing aspects.

According to a nineteenth aspect, an embodiment of the present invention provides a computer program product including instructions; and when the computer program product is run on a computer, the computer is enabled to perform the fake base station identification method described in any one of the foregoing aspects.

According to a twentieth aspect, an embodiment of the present invention provides a communications chip. The communications chip may include a processor and one or more interfaces coupled to the processor. For example, the processor may be configured to invoke, from a memory, a program for implementing the fake base station identification method provided in any one of the foregoing aspects, and execute instructions included in the program. The interface may be configured to output a processing result of the processor.

### BRIEF DESCRIPTION OF DRAWINGS

To describe the technical solutions in the embodiments of this application or in the background more clearly, the following describes the accompanying drawings used in describing the embodiments of this application or the background.
FIG. 1 is a schematic diagram of an application scenario according to an embodiment of the present invention;
FIG. 2 is a schematic diagram of a wireless communications system according to an embodiment of the present invention;
FIG. 3 is a schematic structural diagram of hardware of a terminal device according to an embodiment of the present invention;
FIG. 4 is a schematic structural diagram of hardware of a network device according to an embodiment of the present invention;
FIG. 5 is a schematic flowchart of a fake base station identification method according to Embodiment 1 of the present invention;
FIG. 6 is a schematic flowchart of a fake base station identification method according to Embodiment 2 of the present invention;
FIG. 7 is a schematic flowchart of a fake base station identification method according to Embodiment 3 of the present invention;
FIG. 8 is a schematic diagram of a logical structure of a terminal device according to an embodiment of the present invention;
FIG. 9 is a schematic diagram of a logical structure of a network device according to an embodiment of the present invention; and
FIG. 10 is a schematic structural diagram of a communications chip according to an embodiment of the present invention.

### DESCRIPTION OF EMBODIMENTS

Terms used in implementations of this application are merely used to explain specific embodiments of this application, and are not intended to limit this application.

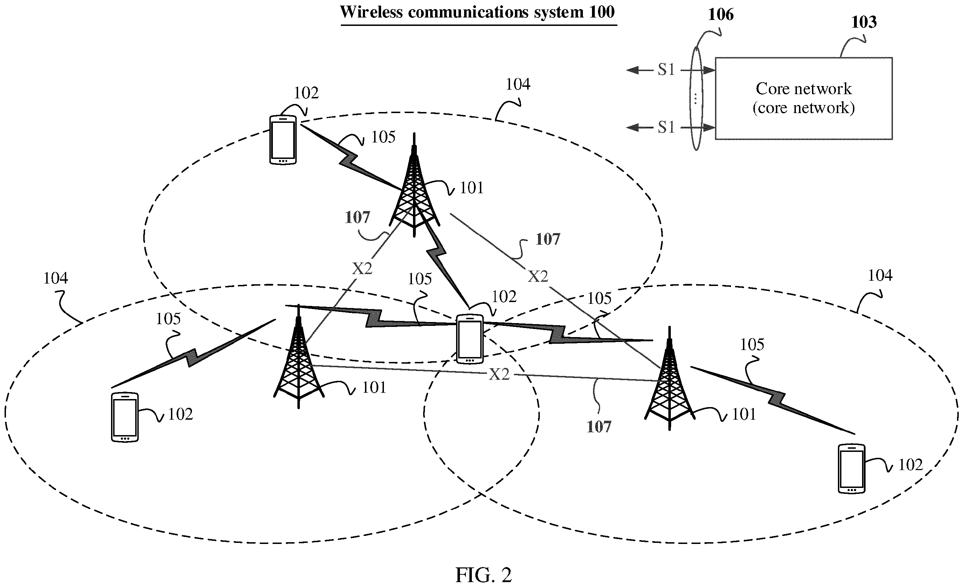

A communications system in this application is first described. FIG. 2 shows a wireless communications system in an embodiment of the present invention. A wireless communications system 100 may operate in a licensed frequency band, or may operate in an unlicensed frequency band. The wireless communications system 100 is not limited to a long term evolution (long term evolution, LTE) system, but may alternatively be a future evolved 5G system, a new radio (new radio, NR) system, or the like. It may be understood that use of the unlicensed frequency band may increase a system capacity of the wireless communications system 100. As shown in FIG. 2, the wireless communications system 100 includes one or more access network devices 101, one or more terminal devices 102, and a core network 103. Details are as follows:

The access network device 101 may perform wireless communication with the terminal device 102 through one or more antennas. Each access network device 101 may provide communication coverage for a coverage area 104 corresponding to the access network device 101. The coverage area 104 corresponding to the access network device 101 may be divided into a plurality of sectors (sector). One sector corresponds to a part (not shown) of the coverage area.

In this embodiment of this application, the access network device 101 may include: an evolved NodeB (evolved NodeB, eNB, or eNodeB), a next-generation NodeB (next-generation NodeB, gNB), or the like. The wireless communications system 100 may include several access network devices 101 of different types, for example, a macro base station (macro base station) and a micro base station (micro base station). The access network device 101 may use different radio technologies, for example, a cell radio access technology or a wireless local area network (wireless local area network, WLAN) radio access technology. In addition, the access network device 101 may alternatively be referred to as a base station, an access point (access point, AP), a transmission reception point (transmission reception point, TRP), a central unit (central unit, CU), or another network entity, and may include some or all of functions of the foregoing network entity.

In this embodiment of this application, the terminal device 102 is a device having a wireless transceiver function. The terminal device 102 may be deployed on land, including an indoor device, an outdoor device, a handheld device, a wearable device, or a vehicle-mounted device; or may be deployed on a water surface (for example, on a ship); or may be deployed in the air (for example, on a plane or a balloon). The terminal device may be a mobile phone (mobile phone), a tablet computer (Pad), a portable computer, a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a smart automobile, a wireless terminal in a smart home (smart home), or the like. An application scenario is not limited in this embodiment of this application. The terminal device may alternatively be referred to as UE, a terminal (terminal), an access terminal, a UE unit, a UE station, a mobile device, a mobile station (mobile station), a mobile terminal, a mobile client, a mobile unit (mobile unit), a remote station, a remote terminal device, a remote unit, a wireless unit, a wireless communications device, a user agent, a user apparatus, or the like.

Specifically, the access network device 101 may be configured to communicate with the terminal device 102 through a wireless interface 105 under control of a network device controller (not shown). In some embodiments, the network device controller may be a part of the core network 103, or may be integrated into the access network device 101. Specifically, the access network device 101 may be configured to transmit control information or user data to the core network 103 through an interface 106 (for example, an S1 interface). Specifically, the access network devices 101 may directly or indirectly communicate with each other through an interface 107 (for example, an X2 interface).

The core network 103 device includes but is not limited to an access and mobility management function (access and mobility management function, AMF) entity, a session management function (session management function, SMF) entity, a user plane function (user plane function, UPF) entity, and the like. The access and mobility management function entity is configured to perform access and mobility management, interact with network elements such as the access network device and the session management function entity, and forward signaling. The session management function entity is configured to manage setup, deletion, and the like of a packet data unit (packet data unit, PDU) session of a user, and maintain a PDU session context and user plane forwarding management channel information. The user plane function entity is configured to receive a data packet from the terminal device 102, and forward the data packet. The user plane function entity is further configured to perform quality of service (quality of service, QoS) control, charging information statistics collection, and the like.

It should be noted that the wireless communications system 100 shown in FIG. 2 is merely intended to more clearly describe the technical solutions in this application, but is not intended to limit this application. A person of ordinary skill in the art may know that as a network architecture evolves and a new service scenario emerges, the technical solutions provided in this application are further applicable to a similar technical problem.

It should be noted that a network device in the following embodiments may be an access network device, or may be a core network device (for example, an AMF).

It should be noted that, terms "system" and "network" in the embodiments of this application may be used interchangeably. "A plurality of' means two or more. In view of this, "a plurality of' may also be understood as "at least two" in the embodiments of this application. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects unless otherwise stated.

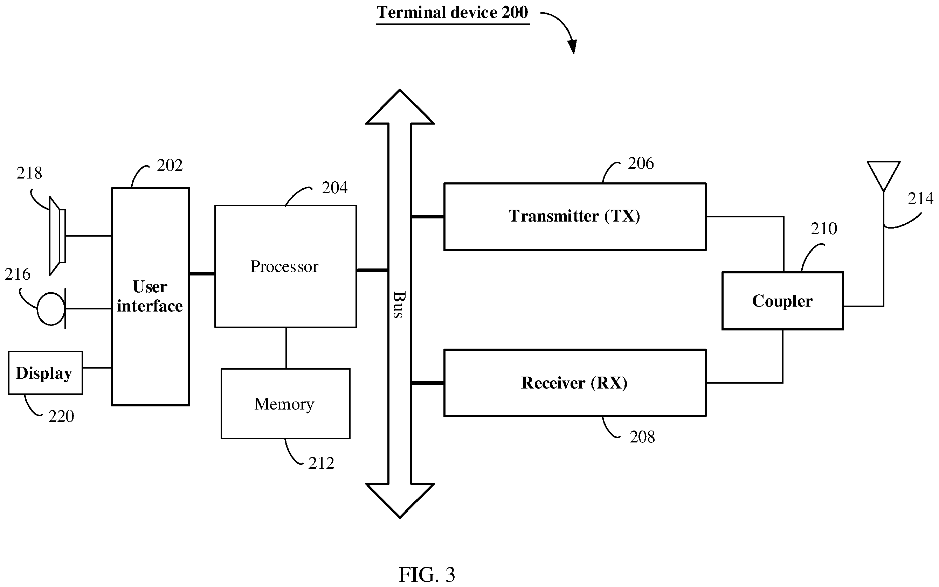

FIG. 3 shows a terminal device according to an embodiment of this application. As shown in FIG. 3, a terminal device 200 may include input/output modules (including an audio input/output module 218, a key input module 216, a display 220, and the like), a user interface 202, one or more processors 204, a transmitter 206, a receiver 208, a coupler 210, an antenna 214, and a memory 212. These components may be connected by using a bus or in another manner. In FIG. 3, an example in which a bus is used for connection is used. Details are as follows:

The antenna 214 may be configured to convert electromagnetic energy into an electromagnetic wave in free space, or convert an electromagnetic wave in free space into electromagnetic energy in a transmission line. The coupler 210 is configured to: divide a mobile communication signal received by the antenna 214 into a plurality of signals, and allocate the signals to a plurality of receivers 208.

The transmitter 206 may be configured to perform transmission processing on a signal output by the processor 204.

The receiver 208 may be configured to perform reception processing on the mobile communication signal received by the antenna 214.

In this embodiment of this application, the transmitter 206 and the receiver 208 may be considered as a wireless modem. The terminal device 200 may include one or more transmitters 206 and one or more receivers 208.

In addition to the transmitter 206 and the receiver 208 shown in FIG. 3, the terminal device 200 may further include other communications components, for example, a GPS module, a Bluetooth (Bluetooth) module, and a wireless fidelity (wireless fidelity, Wi-Fi) module. In addition to the foregoing wireless communication signal, the terminal device 200 may further support another wireless communication signal, for example, a satellite signal or a short-wave signal. In addition to wireless communication, a wired network interface (for example, a LAN interface) 201 may be further configured on the terminal device 200 to support wired communication.

The input/output modules may be configured to implement interaction between the terminal device 200 and a user/an external environment, and may mainly include the audio input/output module 218, the key input module 216, the display 220, and the like. Specifically, the input/output modules may further include a camera, a touchscreen, a sensor, and the like. All the input/output modules communicate with the processor 204 through the user interface 202.

The memory 212 may be coupled to the processor 204 by using the bus or an input/output port, or the memory 212 may be integrated with the processor 204. The memory 212 is configured to store various software programs and/or a plurality of groups of instructions. Specifically, the memory 212 may include a high-speed random access memory, and may also include a nonvolatile memory, for example, one or more magnetic disk storage devices, flash memory devices, or other nonvolatile solid-state storage devices. The memory 212 may store an operating system (which is referred to as a system for short below), for example, an embedded operating system such as Android, iOS, Windows, or Linux. The memory 212 may further store a network communications program. The network communications program may be used to communicate with one or more additional devices, one or more terminal devices, and one or more network devices. The memory 212 may further store a user interface program. The user interface program may use a graphical operating window to vividly display content of an application program, and use an input control such as a menu, a dialog box, and a key to receive a control operation performed by a user on the application program.

In this embodiment of this application, the memory 212 may be configured to store an implementation program that is of the fake base station identification method provided in one or more embodiments of this application and that is on the terminal device 200 side. For implementation of the fake base station identification method provided in one or more embodiments of this application, refer to subsequent embodiments.

The processor 204 may be configured to read and execute computer-readable instructions. Specifically, the processor 204 may be configured to: invoke a program stored in the memory 212, for example, the implementation program that is of the fake base station identification method provided in one or more embodiments of this application and that is on the terminal device 200 side, and execute instructions included in the program to implement the method in the subsequent embodiments. The processor 204 may support one or more of global system for mobile communications (global system for mobile communications, GSM) (2G) communication, wideband code division multiple access (wideband code division multiple access, WCDMA) (3G) communication, long term evolution (long term evolution, LTE) (4G) communication, 5G communication, future evolved communication, and the like. Optionally, the processor 204 specifically drives or controls the transmitter 206 to send any message or data. Optionally, the processor 204 specifically drives or controls the receiver 208 to receive any message or data. Therefore, the processor 204 may be considered as a control center for performing sending or reception, and the transmitter 206 and the receiver 208 are specific executors of sending and reception operations.

It may be understood that the terminal device 200 may be the terminal device 102 in the communications system 100 shown in FIG. 2, and may be implemented as user equipment (user equipment, UE), a terminal (terminal), an access terminal, a UE unit, a UE station, a mobile device, a mobile station, a mobile station (mobile station), a mobile terminal, or the like.

It should be noted that the terminal device 200 shown in FIG. 3 is merely an implementation of this embodiment of this application, and in actual application, the terminal device 200 may further include more or fewer components. This is not limited herein.

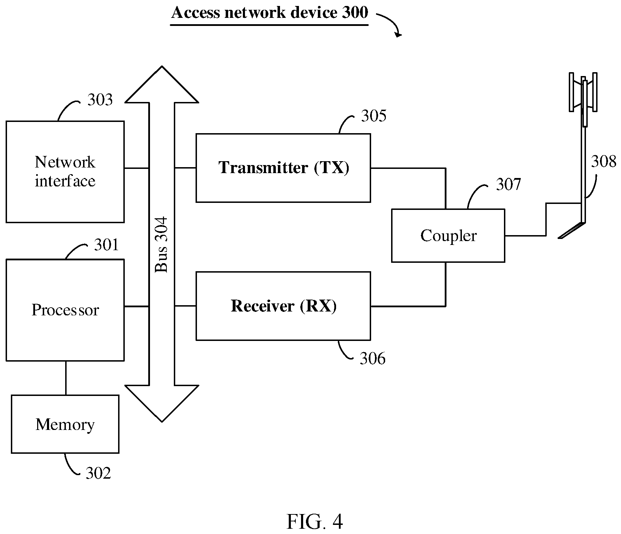

FIG. 4 shows a network device according to an embodiment of this application. As shown in FIG. 4, an access network device 300 may include one or more processors 301, a memory 302, a network interface 303, a transmitter 305, a receiver 306, a coupler 307, and an antenna 308. These components may be connected by using a bus 304 or in another manner. In FIG. 4, an example in which a bus is used for connection is used. Details are as follows:

The network interface 303 may be used by the access network device 300 to communicate with another communications device, for example, another network device. Specifically, the network interface 303 may be a wired interface.

The transmitter 305 may be configured to perform transmission processing, for example, signal modulation, on a signal that is output by the processor 301. The receiver 306 may be configured to perform reception processing, for example, signal demodulation, on a mobile communication signal received by the antenna 308. In some embodiments of this application, the transmitter 305 and the receiver 306 may be considered as a wireless modem. The access network device 300 may include one or more transmitters 305 and one or more receivers 306. The antenna 308 may be configured to convert electromagnetic energy in a transmission line into an electromagnetic wave in free space, or convert an electromagnetic wave in free space into electromagnetic energy in a transmission line. The coupler 307 may be configured to: divide a mobile communication signal into a plurality of signals, and allocate the signals to a plurality of receivers 306.

The memory 302 may be coupled to the processor 301 by using the bus 304 or an input/output port, or the memory 302 may be integrated with the processor 301. The memory 302 is configured to store various software programs and/or a plurality of groups of instructions. Specifically, the memory 302 may include a high-speed random access memory, and may also include a nonvolatile memory, for example, one or more magnetic disk storage devices, flash memory devices, or other nonvolatile solid-state storage devices. The memory 302 may store an operating system (which is referred to as a system below), for example, an embedded operating system such as uCOS, VxWorks, or RTLinux. The memory 302 may further store a network communications program. The network communications program may be used to communicate with one or more additional devices, one or more terminal devices, and one or more network devices.

In this embodiment of this application, the processor 301 may be configured to read and execute computer-readable instructions. Specifically, the processor 301 may be configured to: invoke a program stored in the memory 302, for example, an implementation program that is of the fake base station identification method provided in one or more embodiments of this application and that is on the access network device 300 side, and execute instructions included in the program.

It may be understood that the access network device 300 may be the network device 101 in the communications system 100 shown in FIG. 2, and may be implemented as a base station, a wireless transceiver, a basic service set (BSS), an extended service set (ESS), a gNB, or the like.

It should be noted that the access network device 300 shown in FIG. 4 is merely an implementation of this embodiment of this application, and in actual application, the access network device 300 may further include more or fewer components. This is not limited herein.

It may be understood that in the embodiments of this application, the terminal device and/or the network device may perform some or all steps in the embodiments of this application. These steps or operations are merely examples. In the embodiments of this application, other operations or variations of various operations may be further performed. In addition, the steps may be performed in a sequence different from a sequence presented in the embodiments of this application, and not all the operations in the embodiments of this application need to be performed.

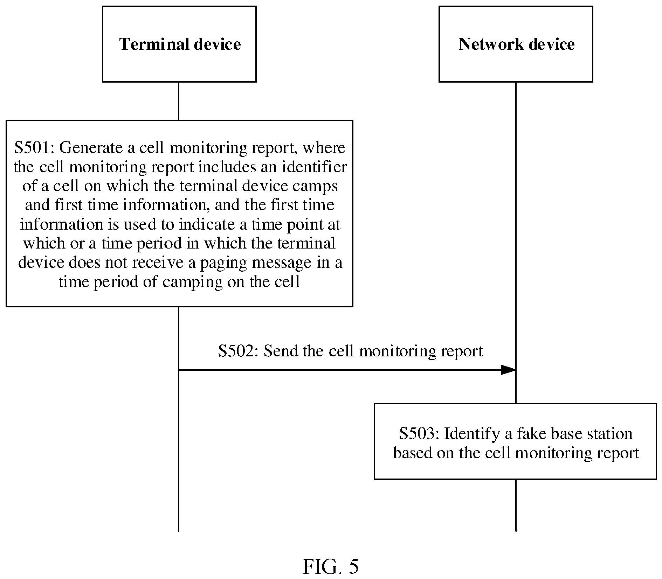

Based on the embodiments corresponding to the wireless communications system 100, the terminal device 200, and the access network device 300, an embodiment of this application provides a fake base station identification method. FIG. 5 is a schematic flowchart of a fake base station identification method according to Embodiment 1 of the present invention. The method includes but is not limited to the following steps S501 to S503. Details are as follows:
S501: A terminal device generates a cell monitoring report, where the cell monitoring report includes an identifier of a cell on which the terminal device camps and first time information, and the first time information is used to indicate a time point at which or a time period in which the terminal device does not receive a paging message in a time period of camping on the cell.
S502: The terminal device sends the cell monitoring report to a network device, and the network device receives the cell monitoring report sent by the terminal device.
S503: The network device identifies a fake base station based on the cell monitoring report.

Specifically, the network device may determine, based on the identifier of the cell in the cell monitoring report, whether a corresponding network device exists. If the corresponding network device does not exist, it may be determined that the cell is a cell to which the fake base station belongs. If the corresponding network device exists, the network device may send a part or all of the cell monitoring report to the corresponding network device, so that the network device determines whether a cloned cell exists.

The cell is a cell in which the terminal device is always in a non-connected state in a time period in which the terminal device camps on the cell. That the terminal device is in the non-connected state in the time period of camping on the cell includes at least one of the following scenarios: The UE does not have any uplink (uplink, UL) service and does not receive any paging message; the UE has a UL service but fails to switch to a connected state in which security is activated; the UE receives the paging message, and the UE responds but fails to switch to a connected (active) state in which security is activated; or the UE cannot activate security configurations.

In this embodiment of the present invention, optionally, the terminal device that generates the cell monitoring report may be a terminal device that is in an idle (idle) state or in an inactive (inactive) state in the time period of camping on the cell.

The identifier of the cell includes but is not limited to at least one of the following: a cell global identifier (cell global identifier, CGI), a cell identifier (cell identifier), or a physical cell identifier (physical cell identifier, PCI).

Optionally, the first time information is used to indicate the time point at which the terminal device does not receive the paging message. The time point may be a paging occasion (paging occasion, PO). The UE or the network device may obtain each PO through calculation based on an international mobile subscriber identity (international mobile subscriber identity number, IMSI) of the UE. If the UE does not receive the paging message at a PO, the UE needs to record the PO in the cell monitoring report. For example, UE 1 starts to camp on a cell 1 at a moment T1, and leaves the cell 1 at a moment T4. A time period T1-T4 includes a PO 1, a PO 2, and a PO 3, that is, the moment T1 is earlier than or equal to the PO 1, and the moment T4 is later than or the same as the PO 3. If the UE 1 does not receive a paging message at the PO 1, PO 2, and PO 3, the UE 1 records an identifier of the cell and the PO in a cell monitoring report. For example, content recorded in the cell monitoring report may be shown in the following Table 1.

**Table 1**

| Identifier of a cell | First time information |
|---|---|
| Cell 1 | PO 1 |
| | PO 2 |
| | PO 3 |

Optionally, the first time information is used to determine or indicate the time period in which the terminal device does not receive the paging message. For example, if UE 1 receives a paging message at a PO 1 in a time period in which the UE 1 camps on a cell 1, and does not receive the paging message in a time period T1-T2 before the PO 1 and in a time period T3-T4 after the PO 1, the UE 1 needs to record the two time periods in a cell monitoring report. For example, although the UE 1 receives the paging message at the PO 1 and responds to the paging message, the UE 1 fails to enter a connected state in the cell 1. The UE 1 does not receive the paging message again at a subsequent PO 2 and PO 2. A manner of recording the time period may be recording a start moment of the time period and an end moment of the time period, recording a start moment of the time period and duration of the time period, or recording an end moment of the time period and duration of the time period. Optionally, the first time information may be alternatively used to indicate a time point at which the terminal device receives the paging message, for example, a PO 1. An example in which the start moment of the time period and the end moment of the time period are recorded is used. For example, content recorded in the cell monitoring report may be shown in the following Table 2.

**Table 2**

| Identifier of a cell | First time information |
|---|---|
| Cell 1 | T1-T2 |
| | T3-T4 |

Optionally, if the UE does not receive the paging message in a time period in which the UE camps on a cell, the first time information recorded by the UE may be the time period in which the UE camps on the cell. A manner of recording the time period of camping may be recording a camping start moment and a camping end moment, recording a camping start moment and camping duration, or recording a camping end moment and camping duration. The start moment may be the moment T1 at which UE 1 camps on the cell 1, or may be the first PO, namely the PO 1, of the UE 1 in the cell 1. The end moment may be the moment T4 at which the UE 1 leaves the cell 1, or may be the last PO, namely the PO 3, of the UE 1 in the cell 1. If the UE 1 does not receive the paging message in the time period in which the UE 1 camps on the cell 1, an example in which the camping start moment and the end camping moment are recorded is used, and content recorded in the cell monitoring report may be shown in the following Table 3.

**Table 3**

| Identifier of a cell | First time information |
|---|---|
| Cell 1 | T1-T4 |

In the cell monitoring report shown in Table 3, for a cell (for example, the cell 1), a start moment (for example, T1) of the first time information recorded by the UE 1 is a moment at which the UE 1 starts camping on the cell, and an end moment (for example, T4) of the first time information recorded by the UE 1 is a moment at which the UE 1 ends camping on the cell.

Optionally, an occasion of recording the cell monitoring report by the terminal device may be a moment at which the terminal device enters an idle state or an inactive state in a cell. That is, the terminal device starts to record the cell monitoring report when entering the idle state or the inactive state. Alternatively, the occasion of recording the cell monitoring report by the terminal device may be a moment at which the terminal device starts to camp on a cell. That is, the terminal device starts to record the cell monitoring report when camping on a cell. Alternatively, the occasion of recording the cell monitoring report by the terminal device may be a moment at which the terminal device fails to enter a connected state in a cell in a preset time period. That is, if the terminal device camps on a cell and fails to enter a connected state, the terminal device records the cell monitoring report. Specifically, the terminal device camps on a cell, and the terminal device starts a timer. If the terminal device enters the connected state in the cell when the timer runs, the terminal device stops the timer. If the timer expires, the terminal device starts to record the cell monitoring report. The camping in this embodiment of this application may refer to cell selection or cell reselection.

Optionally, the cell monitoring report recorded by the terminal device may alternatively be predefined in a protocol. That is, by default, the terminal device needs to record information about a cell on which the terminal device camps and information about a time point at which or a time period in which the paging message is not received.

Optionally, the cell monitoring report may further include indication information used to indicate that the terminal device does not receive the paging message at the time point or in the time period. The indication information may be indicated by 1 bit (bit). For example, 0 indicates that the paging message is not received, and 1 indicates that the paging message is received. In addition to the information about the time point at which or the time period in which the paging message is not received, the cell monitoring report may further record information about a time point at which or a time period in which the paging message is received. For example, if the UE 1 receives the paging message at the PO 1 in the time period in which the UE 1 camps on the cell 1, and does not receive the paging message at the PO 2 and PO 3, the content recorded in the cell monitoring report may be shown in the following Table 4.

**Table 4**

| Identifier of a cell | First time information | Indication information |
|---|---|---|
| Cell 1 | PO 1 | 1 |
| | PO 2 | 0 |
| | PO 3 | 0 |

In a possible implementation, the cell monitoring reports shown in Table 1 to Table 3 do not need to carry the indication information. It may be defined in a protocol that the time information carried in the cell monitoring report indicates, by default, the time point at which or the time period in which the paging message is not received.

After generating the cell monitoring report, the terminal device needs to report the cell monitoring report to the network device, and the network device identifies a fake base station based on the cell monitoring report. The network device may be an access network device (for example, a base station) or may be a core network device (for example, an AMF).

For example, if the terminal device is in the inactive state, the terminal device may send the cell monitoring report to a current serving base station, and the current serving base station receives the cell monitoring report sent by the terminal device. If a cell recorded in the cell monitoring report actually exists in a network, that is, a base station to which the cell belongs can be found, the current serving base station forwards the cell monitoring report to the base station or an operation, administration and maintenance (operation, administration and maintenance, OAM) device to which the cell recorded in the cell monitoring report belongs. The base station or the OAM to which the cell belongs identifies a fake base station based on the cell monitoring report reported by the terminal device.

If the terminal device is in the idle state, the terminal device may send the cell monitoring report to a current serving base station, and the current serving base station receives the cell monitoring report sent by the terminal device. If a cell recorded in the cell monitoring report actually exists in a network, that is, a base station to which the cell belongs can be found, the cell monitoring report may be forwarded to an AMF or an OAM to which the cell recorded in the cell monitoring report belongs. The AMF or the OAM to which the cell belongs identifies a fake base station based on the cell monitoring report reported by the terminal device.

Optionally, the network device may further record information about a time point or a time period of sending the paging message when the UE fails to be paged and an identifier of the UE. Optionally, the network device may further record an identifier of a cell in which the UE fails to be paged. After receiving the cell monitoring report reported by the terminal device, the network device may identify a fake cell by comparing the cell monitoring report reported by the terminal device with paging failure information recorded by the network device. For example, the network device is a base station. A base station A to which the cell 1 belongs triggers a base station in a radio access network (radio access network, RAN) to page the UE 1, and continuously sends RAN paging from the PO 1 to the PO 4. However, the paging fails at the PO 1, PO 2, and PO 3, and the paging succeeds only at the PO 4. In this case, paging failure information recorded by the base station A to which the cell 1 belongs may be shown in the following Table 5.

**Table 5**

| Identifier of UE | Moment at which paging fails |
|---|---|
| UE 1 | PO 1 |
| | PO 2 |
| | PO 3 |

Because the UE 1 camps on the cell 1 of the fake base station from the PO 1 to the PO 3, the UE 1 receives and responds to the RAN paging only at the PO 4 when moving to a cell 2. In this case, a base station to which the cell 2 belongs may forward the cell monitoring report of the UE 1 to the base station A to which the cell 1 belongs. It is assumed that the cell monitoring report reported by the UE 1 is shown in Table 1. The base station A to which the cell 1 belongs may learn, based on the cell monitoring report shown in Table 1 and the paging failure information shown in Table 5, that the UE 1 camps on the cell 1 at the PO 1, PO 2, and PO 3, and the base station fails to page the UE 1. In this case, the base station may determine that the fake cell 1 exists. Alternatively, the cell monitoring report reported by the UE 1 is shown in Table 3. The base station A to which the cell 1 belongs may learn, based on the cell monitoring report shown in Table 3 and the paging failure information shown in Table 5, that the UE 1 camps on the cell 1 at the PO 1, PO 2, and PO 3 (the PO 1, PO 2 and PO 3 are in a time period T1-T4), and the base station A fails to page the UE 1. In this case, the base station A may determine that the fake cell 1 exists.

Optionally, to improve precision of identifying the fake base station by the network device, the cell monitoring report may further include measured quality of the cell. The measured quality of the cell may be quality of the cell measured by the terminal device at the time point at which the paging message is not received; the measured quality of the cell may be average quality of the cell measured by the terminal device at the time point at which the paging message is not received; or the measured quality of the cell may be average quality of the cell measured by the terminal device in the time period of camping on the cell. The measured quality of the cell may be used by the network device to identify the fake base station.

Optionally, the terminal device may also record the measured quality of the cell in the cell monitoring report only when the measured quality of the cell is lower than a threshold. For example, the UE 1 does not receive the paging message at the PO 1, and quality of the cell 1, on which the UE 1 camps is lower than a threshold at the PO 1, the UE 1 records time information of the PO 1 and measured quality of the cell 1. If the UE 1 does not receive the paging message at a plurality of POs that are in the time period in which the UE 1 camps on the cell 1, and measured quality of the cell 1 at the plurality of POs is lower than a threshold, the UE 1 may record average measured quality at these POs, and record corresponding time information of the POs. The measured quality of the cell recorded in the cell monitoring report is used by the network device to determine whether the UE receives no downlink paging is caused by poor downlink (downlink, DL) quality or another reason. For example, the another reason may be that the UE camps on a cell to which a fake base station belongs.

The measured quality of the cell includes at least one of received signal code power (received signal code power, RSCP), reference signal received power (reference signal received power, RSRP), reference signal received quality (reference signal received quality, RSRQ), a signal noise ratio (signal noise ratio, SNR), a signal to interference plus noise ratio (signal to interference plus noise ratio, SINR), a reference signal strength indication (reference signal strength indication, RSSI), or other signal quality. The measured quality of the cell may be at a cell level, a beam level, a synchronization signal/physical broadcast channel block level, a numerology (numerology) level, a slicing (slicing) level, or a bandwidth part (bandwidth part, BWP) level. The measured quality of the cell may be obtained by measuring at least one of a downlink synchronization channel, a channel-state information reference signal (channel-state information reference signal, CSI-RS), a demodulation reference signal (demodulation reference signal, DMRS), a cell-specific reference signal (cell-specific reference signal, CRS), a synchronization signal (SS), a synchronization signal/physical broadcast channel block (synchronization signal/physical broadcast channel block, SS/PBCH Block), or another downlink signal.

Corresponding to downlink signal quality, a downlink signal quality reference threshold may include at least one of an RSCP threshold, an RSRP threshold, an RSRQ threshold, an SNR threshold, an SINR threshold, an RSSI threshold, or another quality threshold.

For example, the content recorded in the cell monitoring report reported by the UE 1 may be shown in the following Table 6.

**Table 6**

| Identifier of a cell | First time information | Measured quality (RSCP) of the cell |
|---|---|---|
| Cell 1 | PO 1 | -100 dBm |
| | PO 2 | -101 dBm |
| | PO 3 | -102 dBm |

After the UE 1 sends the cell monitoring report shown in Table 6 to the base station A to which the cell 1 belongs, the base station A may learn, based on the cell monitoring report shown in Table 6 and the paging failure information shown in Table 5, that at the PO 1, PO 2, and PO 3, the UE 1 camps on the cell 1 and the base station fails to page the UE 1. In addition, if quality of the cell 1 at the PO 1, PO 2, and PO 3 is greater than a preset threshold (for example, -106 dBm), the base station A may learn that a failure in receiving the paging message by the UE 1 at the PO 1, PO 2, and PO 3 is not caused by poor cell quality, but is probably caused by that the cell 1 is a cell that belongs to a fake base station. In this case, the base station A may determine that the fake cell 1 exists.

Optionally, the cell monitoring report may further include location information of the terminal device at the time point or in the time period. The location information may be obtained by the terminal device through measurement by using a global positioning system (global positioning system, GPS) technology. The location information is used by the network device to further determine whether the cloned cell exists in a network and a location of the cloned cell. For example, the content recorded in the cell monitoring report reported by the UE 1 may be shown in the following Table 7.

**Table 7**

| Identifier of a cell | First time information | Location information |
|---|---|---|
| Cell 1 | PO 1 | Location 1 |
| | PO 2 | Location 2 |
| | PO 3 | Location 3 |

After the foregoing process is performed, the network device may preliminarily determine that the fake cell 1 exists. If a real cell 1 exists in the network, the network device may further determine whether the cell 1 has a cloned cell. In this case, the cloned cell 1 may be found manually at the location 1 carried in the cell monitoring report, and the cloned cell 1 may be removed.

Optionally, after identifying the fake cell, the network device may add the fake cell to a blacklist.

Optionally, the cell monitoring report may include frequency information of the cell. The frequency information may be used by the network device to identify a cell. For example, a cell corresponding to a frequency 1 is the cell 1, and a cell corresponding to a frequency 2 is the cell 2.

Optionally, if the time information recorded in the cell monitoring report is a time point, the cell monitoring report may further include camping time information of the terminal device in the cell and/or recording time information in the cell monitoring report. The camping time information of the terminal device in the cell may include a moment at which the terminal device starts camping on the cell and camping duration, a moment at which the terminal device ends camping on the cell and camping duration, or a moment at which the terminal device starts camping on the cell and a moment at which the terminal device ends camping on the cell. The time when the cell monitoring report is recorded may include a start moment of recording the cell monitoring report and recording duration, an end moment of recording the cell monitoring report and recording duration, or a start moment of recording the cell monitoring report and an end moment of recording the cell monitoring report.

The foregoing processes are described by using an example in which the cell recorded in the cell monitoring report actually exists in the network, that is, the base station to which the cell belongs can be found. If the cell recorded in the cell monitoring report actually does not exist in the network, after receiving the cell monitoring report sent by the terminal device, the current serving base station marks the cell that actually does not exist in the network as a fake cell. If the location information of the terminal device is further recorded in the cell monitoring report, the fake cell may be found manually at a corresponding location, and the fake cell is removed.

In Embodiment 1 shown in FIG. 5, the terminal device may record information about the camped-on cell in which the paging message is not received, and report the information to the network device, to assist the network device in identifying the fake base station. This helps reduce complexity of identifying the fake base station by an operator through a drive test, avoid a denial-of-service attack (DoS attack) on the terminal device caused by the fake base station, and avoid a service problem caused by the terminal device not receiving downlink paging.

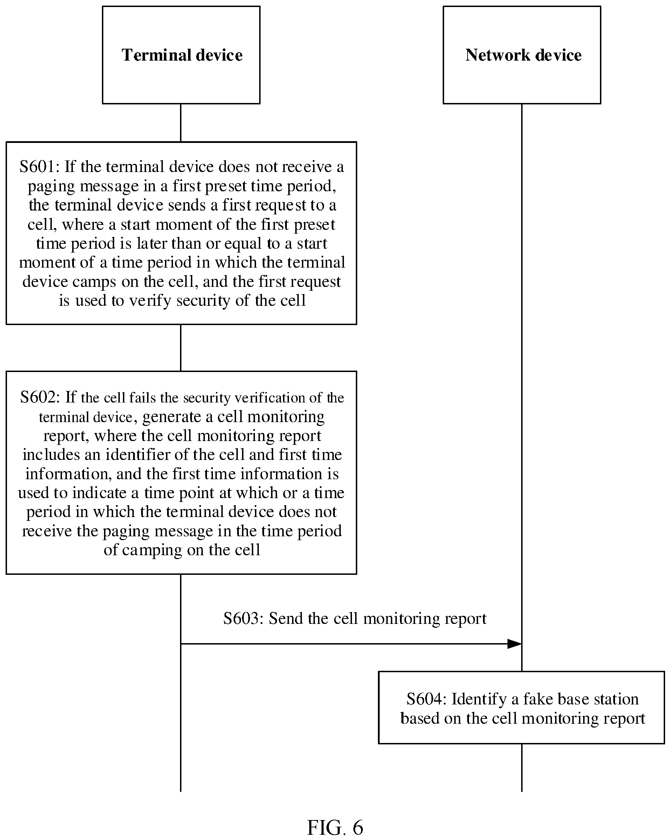

In Embodiment 1 shown in FIG. 5, the terminal device records the cell monitoring report, and a process of identifying the fake cell or the fake base station is mainly performed by the network device. In another optional implementation, after the terminal device camps on a cell and fails to enter a connected state, the terminal device may actively verify security of a current serving cell, to preliminarily verify whether the current cell is a suspicious cell. To improve precision of identifying the fake base station, the terminal device may further report the cell monitoring report to the network device, and the network device further identifies the fake cell. Specifically, FIG. 6 is a schematic flowchart of a fake base station identification method according to Embodiment 2 of the present invention. The method includes but is not limited to the following steps S601 to S604. Details are as follows:
S601: If a terminal device is in a non-connected state in a first preset time period, the terminal device sends a first request to a cell.

A start moment of the first preset time period is later than or the same as a start moment of a time period in which the terminal device camps on the cell.

That the terminal device is in the non-connected state is that, for example, the terminal device is in an idle state or an inactive state. That the terminal device is in the non-connected state includes at least one of the following scenarios: The UE does not have any uplink (uplink, UL) service and does not receive any paging message; the UE has a UL service but fails to switch to a connected state in which security is activated; the UE receives the paging message, and the UE responds but fails to switch to a connected (active) state in which security is activated; or the UE cannot activate security configurations.

Specifically, after the terminal device camps on the cell, the terminal device starts a first timer. Alternatively, when the terminal device does not receive the paging message at the first paging moment after camping on the cell, the terminal device starts a first timer. If the terminal device enters a connected state when the first timer runs, the terminal device stops the first timer. If the first timer expires, the terminal device sends the first request to the cell.

The first request is used to verify security of the cell. If the cell fails the security verification of the terminal device, step S602 is performed. Specifically, the first request may be used to request to activate security configurations of the terminal device. That the cell fails the security verification of the terminal device may be that the terminal device fails to enter the connected state, or the terminal device cannot activate the security configurations. That the terminal device cannot activate the security configurations may include that the terminal device does not receive the security configurations sent by a network device, the terminal device fails to activate the security configurations based on received security configurations, or the terminal device cannot correctly verify, based on a new security parameter derived from stored security configurations, a received message sent by a network device.
S602: The terminal device generates a cell monitoring report, where the cell monitoring report includes an identifier of the cell and first time information, and the first time information is used to indicate a time point at which or a time period in which the terminal device does not receive the paging message in the time period of camping on the cell.
S603: The terminal device sends the cell monitoring report to the network device, and the network device receives the cell monitoring report sent by the terminal device.
S604: The network device identifies a fake base station based on the cell monitoring report.

For example, if the UE camps on the cell and does not actively trigger a service, and the UE does not receive downlink paging, a possibility is that the UE camps on a cell that belongs to a fake base station, and the DL paging of the UE is blocked by the fake base station. To identify a fake cell or a fake base station, after the UE performs cell selection or cell reselection to enter a cell, for example, after the UE camps on the cell for the first time, the UE starts a timer T1. If the UE does not receive any DL paging in the timer and the UE does not trigger a UL service, that is, the UE is in a non-connected state in the cell in the timer, after the timer expires, the UE may send a first request to a current serving cell, where the first request is used to verify security of the cell. A purpose of sending the first request by the terminal device is to request to enter a connected state or request to activate security configurations, and a security verification process between the terminal device and the current serving cell is involved. If the request fails to be sent, or the terminal device cannot activate the security configurations, the terminal device considers that verification of the current serving cell fails, and the UE records that the cell is a suspicious fake base station and generates the cell monitoring report. For content of the cell monitoring report, refer to related descriptions in Embodiment 1 shown in FIG. 5. Details are not described herein again.

Optionally, the terminal device that generates the cell monitoring report may be a terminal device that is in an idle (idle) state or in an inactive (inactive) state in the time period of camping on the cell.

Optionally, duration T1 of the timer is less than periodic tracking area update (tracking area update, TAU)/radio access network notification area update (radio access network notification area update, RNAU) duration.

Optionally, the terminal device starts the timer once only when camping on the cell for the first time. If it is verified that the cell is a valid cell, the UE does not need to perform the verification process subsequently. If the verification fails, related information about the cell is recorded in the cell monitoring report and the cell monitoring report is reported. Optionally, after the terminal device fails to verify the cell, the terminal device may further set the cell to have a lowest priority in a period of time T2, or consider that the cell is barred (barred) for a period of time T2, to trigger reselection to another cell.

Optionally, lengths of T1 and T2 may be sent by the network to the UE, or may be predefined in a protocol.

For related descriptions of steps S602 to S604 in this embodiment, refer to related descriptions in the embodiment shown in FIG. 5. Details are not described herein again.

In this embodiment of the present invention, if the terminal device fails to enter a connected state in a period of time in which the terminal device camps on the cell, the terminal device may actively initiate a security verification process. If the security verification fails, the terminal device needs to record the cell monitoring report, and report the cell monitoring report to the network device for fake base station identification. This helps reduce complexity of identifying a fake base station by an operator through a drive test, avoid a denial-of-service attack (DoS attack) on the terminal device caused by the fake base station, and avoid a service problem caused by the terminal device not receiving downlink paging.

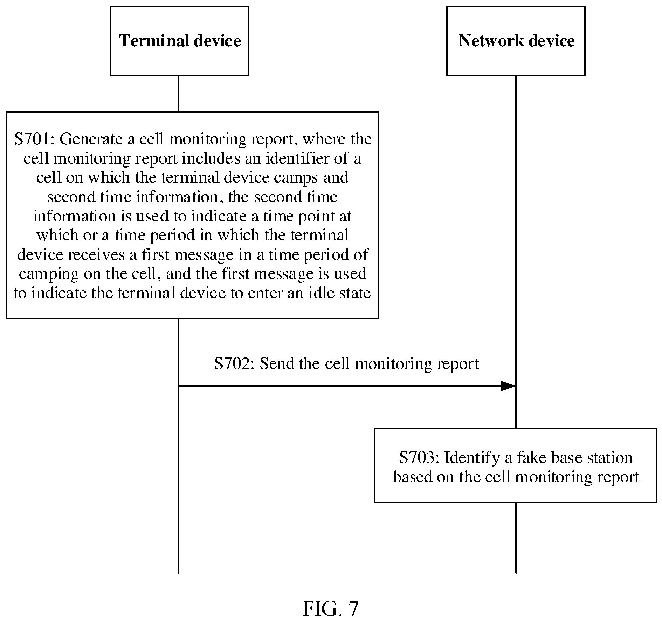

FIG. 7 is a schematic flowchart of a fake base station identification method according to Embodiment 3 of the present invention. The method includes but is not limited to the following steps S701 to S703. Optionally, a terminal device in Embodiment 3 of the present invention is in a deactive state (or referred to as an inactive state). Details are as follows:
S701: The terminal device generates a cell monitoring report, where the cell monitoring report includes an identifier of a cell on which the terminal device camps and second time information, and the second time information is used to indicate a time point at which or a time period in which the terminal device receives a first message in a time period of camping on the cell.
S702: The terminal device sends the cell monitoring report to a network device, and the network device receives the cell monitoring report sent by the terminal device.
S703: The network device identifies a fake base station based on the cell monitoring report.

Optionally, the terminal device that generates the cell monitoring report may be a terminal device that is in an inactive (inactive) state in the time period of camping on the cell.

The terminal device enters an idle state from the deactive state based on the first message.

For example, after receiving the first message, the terminal device generates the cell monitoring report.

The first message may be a radio resource control (radio resource control, RRC) connection setup (connection setup) message, an RRC setup message, or a first paging message. The first paging message includes a core network identifier of the terminal device. The first paging message is a paging message triggered by a core network device. Specifically, after receiving CN paging or an RRC (connection) setup message, the inactive UE enters the idle state. When the terminal device camps on a fake cell, to prevent the terminal device from identifying the fake cell, a fake base station to which the fake cell belongs may send CN paging to the terminal device, to trigger the terminal device to enter the idle state. Alternatively, after the terminal device initiates an access request, the fake base station may send RRC (connection) setup, to trigger the terminal device to enter the idle state. Therefore, to identify the fake cell or the fake base station, when the inactive UE enters the idle state in a current serving cell, and the UE fails to enter a connected state in the current serving cell or fails to activate security configurations, the UE records information about the cell, and generates the cell monitoring report. Content of the cell monitoring report includes time information of receiving the first message by the terminal device and an identifier of the cell. The time information may be a time point (for example, a PO) or a time period. A time point is used as an example. If UE 1 receives, at a PO 1, CN paging sent by a cell 1, for example, the content recorded in the cell monitoring report may be shown in the following Table 8.

**Table 8**

| Identifier of a cell | Second time information |
|---|---|
| Cell 1 | PO 1 |

Alternatively, if UE 1 receives, in a time period T1-T2, CN paging sent by a cell 1, for example, the content recorded in the cell monitoring report may be shown in the following Table 9.

**Table 9**

| Identifier of a cell | Second time information |
|---|---|
| Cell 1 | T1-T2 |

Optionally, the cell monitoring report may further include a reason why the terminal device enters the idle state, for example, the CN paging or the RRC (connection) setup is received. The reason carried in the cell monitoring report may be used by the network device to identify the fake base station.

The terminal device may send the cell monitoring report to a current serving base station, and the current serving base station receives the cell monitoring report sent by the terminal device. If a cell recorded in the cell monitoring report actually exists in a network, that is, a base station to which the cell belongs can be found, the current serving base station forwards the cell monitoring report to the base station or an OAM to which the cell recorded in the cell monitoring report belongs. The base station or the OAM to which the cell belongs identifies the fake base station based on the cell monitoring report reported by the terminal device.

Optionally, the network device may further record time information of sending the first message to the terminal device and an identifier of the UE. After receiving the cell monitoring report reported by the terminal device, the network device may identify a fake cell by comparing the cell monitoring report reported by the terminal device with information recorded by the network device. For example, the network device is a base station. A base station A to which the cell 1 belongs sends CN paging to the UE 1 at a PO 4. In this case, paging failure information recorded by the base station A to which the cell 1 belongs may be shown in the following Table 10.

**Table 10**

| Identifier of UE | Moment of sending CN paging |
|---|---|
| UE 1 | PO 4 |

It can be learned from the content recorded in Table 10 that the base station A does not send the CN paging to the UE 1 at the PO 1, but the cell 1 recorded in the cell monitoring report reported by the UE 1 sends the CN paging to the UE 1 at the PO 1. In this case, the base station A may determine that the fake cell 1 exists.

Optionally, the cell monitoring report may further include location information of the terminal device at the time point or in the time period. The location information may be obtained by the terminal device through measurement by using a global positioning system (global positioning system, GPS) technology. The location information is used by the network device to further determine whether a cloned cell exists in the network and a location of the cloned cell. Therefore, the cloned cell may be found manually at a location carried in the cell monitoring report, and the cloned cell is removed.

Optionally, after identifying the fake cell, the network device may add the fake cell to a blacklist.

Optionally, the cell monitoring report may further include any one or more of frequency information of the cell, camping time information of the terminal device in the cell, and recording time information in the cell monitoring report. The frequency information may be used by the network device to identify a cell. For example, a cell corresponding to a frequency 1 is the cell 1, and a cell corresponding to a frequency 2 is a cell 2. The camping time information of the terminal device in the cell may include a moment at which the terminal device starts camping on the cell and camping duration, a moment at which the terminal device ends camping on the cell and camping duration, or a moment at which the terminal device starts camping on the cell and a moment at which the terminal device ends camping on the cell. The time when the cell monitoring report is recorded may include a start moment of recording the cell monitoring report + duration of recording the cell monitoring report, an end moment of recording the cell monitoring report + duration of recording the cell monitoring report, or a start moment of recording the cell monitoring report + an end moment of recording the cell monitoring report.

The foregoing processes are described by using an example in which the cell recorded in the cell monitoring report actually exists in the network, that is, the base station to which the cell belongs can be found. If the cell recorded in the cell monitoring report actually does not exist in the network, after receiving the cell monitoring report sent by the terminal device, the current serving base station marks the cell that actually does not exist in the network as the fake cell. If the location information of the terminal device is further recorded in the cell monitoring report, the fake cell may be found manually at a corresponding location, and the fake cell is removed.

According to Embodiment 3 shown in FIG. 7, the terminal device may record information about a cell in which an abnormal paging message is sent, and report the information to the network device, to assist the network device in identifying the fake base station. This helps reduce complexity of identifying the fake base station by an operator through a drive test, avoid a denial-of-service attack (DoS attack) on the terminal device caused by the fake base station, and avoid a service problem caused by the terminal device not receiving downlink paging.

The foregoing mainly describes the solutions provided in the embodiments of this application from a perspective of interaction between devices. It may be understood that, to implement the foregoing functions, the network elements, for example, the terminal device and the network device, include corresponding hardware structures and/or software modules for performing the functions. A person skilled in the art should be easily aware that, in combination with the examples described in the embodiments disclosed in this specification, network elements and algorithm steps may be implemented by using hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, functional modules of the terminal device, the network device, and the like may be obtained through division based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in the embodiments of this application, division into the modules is an example, and is merely logical function division. In actual implementation, another division manner may be used.

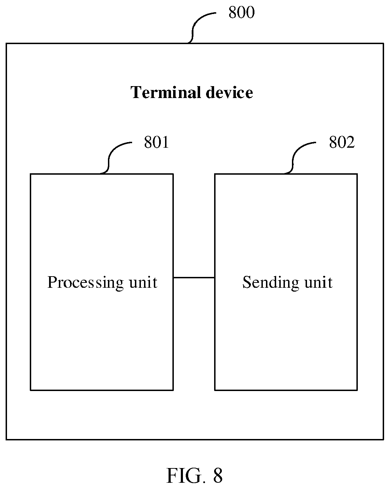

When functional modules are obtained through division based on corresponding functions, FIG. 8 is a schematic diagram of a possible logical structure of a terminal device in the foregoing embodiments. A terminal device 800 includes a processing unit 801 and a sending unit 802.

For example, the sending unit 802 is configured to support the terminal device in performing the steps of sending information by the terminal device in the method embodiments shown in FIG. 5 to FIG. 7. The processing unit 801 is configured to support the terminal device in performing the steps of determining information by the terminal device in the method embodiments shown in FIG. 5 to FIG. 7, and another function other than functions of the sending unit and a receiving unit, and the like.

In a hardware implementation, the processing unit 801 may be a processor, a processing circuit, or the like. The sending unit 802 may be a transmitter, a transmitter circuit, or the like.

For example, in Embodiment 1 of the embodiments of the present invention, the processing unit 801 is configured to generate a cell monitoring report, where the cell monitoring report includes an identifier of a cell on which the terminal device camps and first time information, and the first time information is used to indicate a time point at which or a time period in which the terminal device does not receive a paging message in a time period of camping on the cell.

The sending unit 802 is configured to send the cell monitoring report to a network device.

Optionally, the cell monitoring report further includes one or more of indication information used to indicate that the terminal device does not receive the paging message at the time point or in the time period, measured quality of the cell, frequency information of the cell, and location information of the terminal device at the time point or in the time period.

Optionally, the measured quality of the cell is quality of the cell measured by the terminal device at the time point; or the measured quality of the cell is average quality of the cell measured by the terminal device in the time period.

In Embodiment 2 of the embodiments of the present invention, the sending unit 802 is configured to: if the terminal device is in a non-connected state in a first preset time period, send a first request to the cell, where a start moment of the first preset time period is later than or the same as a start moment of the time period of camping, and the first request is used to verify security of the cell.

The processing unit 801 is configured to: if the cell fails the security verification, generate a cell monitoring report, where the cell monitoring report includes an identifier of a cell on which the terminal device camps and first time information, and the first time information is used to indicate a time point at which or a time period in which the terminal device does not receive a paging message in the time period of camping on the cell.

The sending unit 802 is further configured to send the cell monitoring report to a network device.

Optionally, the processing unit 801 is further configured to: if the cell fails the security verification, set the cell to have a lowest priority in a second preset time period.

Optionally, the cell monitoring report further includes one or more of indication information used to indicate that the terminal device does not receive the paging message at the time point or in the time period, measured quality of the cell, frequency information of the cell, and location information of the terminal device at the time point or in the time period.

Optionally, the measured quality of the cell is quality of the cell measured by the terminal device at the time point; or the measured quality of the cell is average quality of the cell measured by the terminal device in the time period.

In Embodiment 3 of the embodiments of the present invention, the processing unit 801 is configured to generate a cell monitoring report, where the cell monitoring report includes an identifier of a cell on which the terminal device camps and second time information, the second time information is used to indicate a time point at which or a time period in which the terminal device receives a first message in a time period of camping on the cell, and the first message is used to indicate the terminal device to enter an idle state.

The sending unit 802 is configured to send the cell monitoring report to a network device.

Optionally, the cell monitoring report further includes one or more of frequency information of the cell and location information of the terminal device at the time point or in the time period.

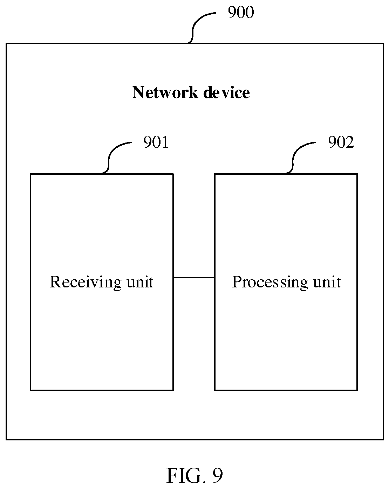

FIG. 9 is a schematic diagram of a possible logical structure of a network device in the foregoing embodiments. A network device 900 includes a receiving unit 901 and a processing unit 902.

For example, the receiving unit 901 is configured to support the network device in performing the steps of sending information by the network device in the method embodiments shown in FIG. 5 to FIG. 7. The processing unit 902 is configured to support the network device in performing the steps of determining information by the network device in the method embodiments shown in FIG. 5 to FIG. 7, and another function other than functions of a sending unit and the receiving unit, and the like.

In a hardware implementation, the processing unit 902 may be a processor, a processing circuit, or the like. The receiving unit 901 may be a transmitter, a transmitter circuit, or the like.

For example, in Embodiment 1 or Embodiment 2 of the embodiments of the present invention, the receiving unit 901 is configured to receive a cell monitoring report sent by a terminal device, where the cell monitoring report includes an identifier of a cell on which the terminal device camps and first time information, and the first time information is used to indicate a time point at which or a time period in which the terminal device does not receive a paging message in a time period of camping on the cell.

The processing unit 902 is configured to identify a fake base station based on the cell monitoring report.

Optionally, if a moment at which the network device fails to page the terminal device includes the time point or the time period includes the moment at which the network device fails to page the terminal device, a base station to which the cell belongs is a fake base station.

Optionally, the cell monitoring report further includes measured quality of the cell; and if a moment at which the network device fails to page the terminal device includes the time point, and the measured quality of the cell is greater than or equal to a first preset threshold, a base station to which the cell belongs is a fake base station; or if the time period includes a moment at which the network device fails to page the terminal device, and the measured quality of the cell is greater than or equal to a first preset threshold, a base station to which the cell belongs is a fake base station.

Optionally, the cell monitoring report further includes one or more of indication information used to indicate that the terminal device does not receive the paging message at the time point or in the time period, frequency information of the cell, and location information of the terminal device at the time point or in the time period.

Optionally, the measured quality of the cell is quality of the cell measured by the terminal device at the time point; or the measured quality of the cell is average quality of the cell measured by the terminal device in the time period.

In Embodiment 3 of the embodiments of the present invention, the receiving unit 901 is configured to a cell monitoring report sent by a terminal device, where the cell monitoring report includes an identifier of a cell on which the terminal device camps and second time information, the second time information is used to indicate a time point at which or a time period in which the terminal device receives a first message in a time period of camping on the cell, and the first message is used to indicate the terminal device to enter an idle state.

The processing unit 902 is configured to identify a fake base station based on the cell monitoring report.

Optionally, if the network device does not send the first message to the terminal device at the time point or in the time period, a base station to which the cell belongs is a fake base station.

Optionally, the cell monitoring report further includes one or more of frequency information of the cell and location information of the terminal device at the time point or in the time period.

It should be noted that, for functions and implementation processes of the units in the embodiments of the present invention, refer to related descriptions in the embodiments shown in FIG. 5 to FIG. 7. Details are not described herein again.

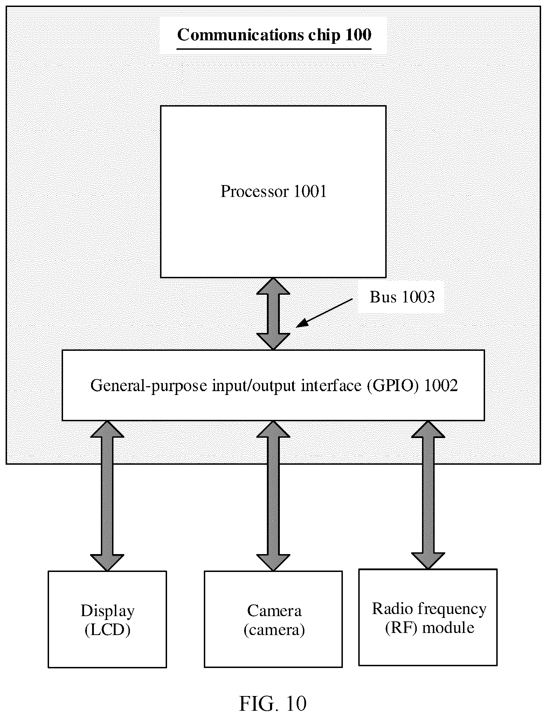

FIG. 10 is a schematic structural diagram of a communications chip according to this application. As shown in FIG. 10, a communications chip 1000 may include a processor 1001 and one or more interfaces 1002 coupled to the processor 1001. Details are as follows:

The processor 1001 may be configured to read and execute computer-readable instructions. In a specific implementation, the processor 1001 may mainly include a controller, an arithmetic unit, and a register. The controller is mainly responsible for decoding an instruction and sending a control signal for an operation corresponding to the instruction. The arithmetic unit is mainly responsible for performing a fixed-point or floating-point arithmetic operation, a shift operation, a logic operation, and the like, or may perform an address operation and address conversion. The register is mainly responsible for storing a register operand, an intermediate operation result, and the like that are temporarily stored during instruction execution. In a specific implementation, a hardware architecture of the processor 1001 may be an application-specific integrated circuit (application-specific integrated circuit, ASIC) architecture, a microprocessor without interlocked pipeline stages (microprocessor without interlocked pipeline stages architecture, MIPS) architecture, an advanced reduced instruction set computing machine (advanced RISC machine, ARM) architecture, an NP architecture, or the like. The processor 1001 may be a single-core or multi-core processor.

The interface 1002 may be configured to input to-be-processed data to the processor 1001, and may output a processing result of the processor 1001. In a specific implementation, the interface 1002 may be a general-purpose input/output (general purpose input/output, GPIO) interface, and may be connected to a plurality of peripheral devices (such as a display (LCD), a camera (camera), and a radio frequency (radio frequency, RF) module). The interface 1002 is connected to the processor 1001 by using a bus 1003.

In this application, the processor 1001 may be configured to: invoke, from a memory, a program for implementing, on a communications device side, the fake base station identification method provided in one or more embodiments of this application, and execute instructions included in the program. The memory may be integrated with the processor 1001, or may be coupled to the communications chip 100 through the interface 1002. The interface 1002 may be configured to output an execution result of the processor 1001. In this application, the interface 1002 may be specifically configured to output a decoding result of the processor 1001. For the fake base station identification method provided in one or more embodiments of this application, refer to the foregoing embodiments. Details are not described herein again.

It should be noted that functions corresponding to each of the processor 1001 and the interface 1002 may be implemented by using a hardware design, may be implemented by using a software design, or may be implemented by combining software and hardware. This is not limited herein.

In another embodiment of this application, a computer storage medium is further provided. The computer storage medium stores computer-executable instructions. A device (which may be a single-chip microcomputer, a chip or the like) or a processor may invoke the computer-executable instructions stored in a readable storage medium to perform the steps of the terminal device or the network device in the fake base station identification method provided in FIG. 5 to FIG. 7. The foregoing computer storage medium may include: any medium that can store program code, such as a USB flash drive, a removable hard disk, a read-only memory, a random access memory, a magnetic disk, or an optical disc.

In another embodiment of this application, a computer program product is further provided. The computer program product includes computer-executable instructions, and the computer-executable instructions are stored in a computer-readable storage medium. At least one processor of a device may read the computer-executable instructions from the computer-readable storage medium, and the at least one processor executes the computer-executable instructions, so that the device implements the steps of the terminal device or the network device in the fake base station identification method provided in FIG. 5 to FIG. 7.

In another embodiment of this application, a communications system is further provided. The communications system includes a plurality of devices, and the plurality of devices include at least two terminal devices. Alternatively, the communications system includes a plurality of devices, and the plurality of devices include a network device and at least one terminal device. For example, the terminal device may be the terminal device provided in FIG. 3 or FIG. 8, and is configured to perform the steps of the terminal device in the fake base station identification method provided in FIG. 5 to FIG. 7; and/or the network device may be the network device provided in FIG. 4 or FIG. 9, and is configured to perform the steps of the network device in the fake base station identification method provided in FIG. 5 to FIG. 7.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive solid-state drive (SSD)), or the like.

In conclusion, the foregoing descriptions are merely example embodiments of the present invention, but are not intended to limit the protection scope of the present invention. Any modification, equivalent replacement, or improvement made within the spirit and principle of the present invention shall fall within the protection scope of the present invention.

## Claims

1. A fake base station identification method, comprising:
generating, by a terminal device, a cell monitoring report, wherein the cell monitoring report comprises an identifier of a cell on which the terminal device camps and first time information, and the first time information is used to indicate a time point at which or a time period in which the terminal device does not receive a paging message in a time period of camping on the cell; and
sending, by the terminal device, the cell monitoring report to a network device.

2. The method according to claim 1, wherein before the generating, by a terminal device, a cell monitoring report, the method further comprises:
if the terminal device is in a non-connected state in a first preset time period, sending, by the terminal device, a first request to the cell, wherein a start moment of the first preset time period is later than or the same as a start moment of the time period of camping, and the first request is used to verify security of the cell, wherein
the cell fails the security verification of the terminal device.

3. The method according to claim 2, wherein after the cell fails the security verification of the terminal device, the method further comprises:
setting, by the terminal device, the cell to have a lowest priority in a second preset time period.

4. The method according to any one of claims 1 to 3, wherein the cell monitoring report further comprises one or more of indication information used to indicate that the terminal device does not receive the paging message at the time point or in the time period, measured quality of the cell, frequency information of the cell, and location information of the terminal device at the time point or in the time period.

5. The method according to claim 4, wherein the measured quality of the cell is quality of the cell measured by the terminal device at the time point; or the measured quality of the cell is average quality of the cell measured by the terminal device in the time period.

6. A fake base station identification method, comprising:
receiving, by a network device, a cell monitoring report sent by a terminal device, wherein the cell monitoring report comprises an identifier of a cell on which the terminal device camps and first time information, and the first time information is used to indicate a time point at which or a time period in which the terminal device does not receive a paging message in a time period of camping on the cell; and
identifying, by the network device, a fake base station based on the cell monitoring report.

7. The method according to claim 6, wherein if a moment at which the network device fails to page the terminal device comprises the time point or the time period comprises the moment at which the network device fails to page the terminal device, a base station to which the cell belongs is a fake base station.

8. The method according to claim 6, wherein the cell monitoring report further comprises measured quality of the cell; and if a moment at which the network device fails to page the terminal device comprises the time point, and the measured quality of the cell is greater than or equal to a first preset threshold, a base station to which the cell belongs is a fake base station; or if the time period comprises a moment at which the network device fails to page the terminal device, and the measured quality of the cell is greater than or equal to a first preset threshold, a base station to which the cell belongs is a fake base station.

9. The method according to any one of claims 6 to 8, wherein the cell monitoring report further comprises one or more of indication information used to indicate that the terminal device does not receive the paging message at the time point or in the time period, frequency information of the cell, and location information of the terminal device at the time point or in the time period.

10. The method according to claim 8, wherein the measured quality of the cell is quality of the cell measured by the terminal device at the time point; or the measured quality of the cell is average quality of the cell measured by the terminal device in the time period.

11. A fake base station identification method, comprising:
generating, by a terminal device, a cell monitoring report, wherein the cell monitoring report comprises an identifier of a cell on which the terminal device camps and second time information, the second time information is used to indicate a time point at which or a time period in which the terminal device receives a first message in a time period of camping on the cell, and the first message is used to indicate the terminal device to enter an idle state; and
sending, by the terminal device, the cell monitoring report to a network device.

12. The method according to claim 11, wherein the cell monitoring report further comprises one or more of frequency information of the cell and location information of the terminal device at the time point or in the time period.

13. A fake base station identification method, comprising:
receiving, by a network device, a cell monitoring report sent by a terminal device, wherein the cell monitoring report comprises an identifier of a cell on which the terminal device camps and second time information, the second time information is used to indicate a time point at which or a time period in which the terminal device receives a first message in a time period of camping on the cell, and the first message is used to indicate the terminal device to enter an idle state; and
identifying, by the network device, a fake base station based on the cell monitoring report.

14. The method according to claim 13, wherein if the network device does not send the first message to the terminal device at the time point or in the time period, a base station to which the cell belongs is a fake base station.

15. The method according to claim 13 or 14, wherein the cell monitoring report further comprises one or more of frequency information of the cell and location information of the terminal device at the time point or in the time period.

16. A terminal device, comprising a module or a unit configured to perform the fake base station identification method according to any one of claims 1 to 5.

17. A network device, comprising a module or a unit configured to perform the fake base station identification method according to any one of claims 6 to 10.

18. A terminal device, comprising a module or a unit configured to perform the fake base station identification method according to any one of claims 11 to 12.

19. A network device, comprising a module or a unit configured to perform the fake base station identification method according to any one of claims 13 to 15.

20. A communications system, comprising a terminal device and a network device, wherein the terminal device is the terminal device according to claim 16 and the network device is the network device according to claim 17, or the terminal device is the terminal device according to claim 18 and the network device is the network device according to claim 19.
